# EUROPEAN PATENT APPLICATION

(11) **EP 4 393 688 A1**
(43) Date of publication of application: **03.07.2024**
(21) Application number: 23213392.6
(22) Date of filing: 30.11.2023
(51) Int. Cl.: B32B 1/00, B32B 15/08, B32B 15/085, B32B 15/09, B32B 15/20, B32B 27/32, B32B 27/34, B32B 27/36, H01M 50/105, H01M 50/126, H01M 50/129, H01M 50/133, C08J 5/18

(54) **POUCH FILM FOR SECONDARY BATTERY WITH EXCELLENT ROOM TEMPERATURE AND HIGH TEMPERATURE SEALING STRENGTH WHERE SEALANT LAYER YIELD STRENGTH, SEALANT LAYER THICKNESS RATIO AND SEALANT LAYER GLASS TRANSITION TEMPERATURE ARE CONTROLLED, METHOD FOR PREPARING THE POUCH FILM, SECONDARY BATTERY USING THE SAME AND METHOD FOR MANUFACTURING THE SECONDARY BATTERY**

(30) Priority: 30.12.2022 KR 20220191189
(71) Applicant: Youlchon Chemical Co., Ltd., Seoul 07057 (KR)
(72) Inventor: SONG, Nok Jung, 07057 Seoul (KR); HAN, Hee Sik, 15430 Ansan-si (KR); JANG, Jee Eun, 15430 Ansan-si (KR); KIM, Yoohan, 15430 Ansan-si (KR); LEE, Doohee, 15430 Ansan-si (KR)
(74) Representative: V.O.

(57) **Abstract**

Disclosed is a secondary battery pouch film including a layered structure wherein at least an outer layer, a barrier layer, and a sealant layer are structured in that order, wherein the sealant layer includes an extrusion (EC) layer and a polypropylene (PP) layer below the extrusion (EC) layer, wherein a thickness ratio of the polypropylene (PP) layer to the sealant layer is more than 0.5, wherein an upper yield strength (N/mm²) in an MD direction of the sealant layer is 17.50 to 19.99, and an upper yield strength (N/mm²) in a TD direction thereof is 17.00 to 19.99, wherein a glass transition temperature (Tg) of the sealant layer is -20°C to -10°C. The pouch film not only has excellent sealing strength at ambient temperature and high temperature, but also has excellent sealing strength maintenance at ambient temperature and especially at high temperature.

## Description

### Technical Field

This specification relates to a pouch film for a secondary battery with excellent sealing strength at ambient and high temperature and a method for preparing the pouch film, and more specifically, to a pouch film for a secondary battery with excellent thermal bonding strength, that is, sealing strength, at ambient and high temperature, and excellent sealing strength maintenance at ambient and high temperature by controlling a yield strength, a thickness ratio of a polypropylene (PP) layer to a sealant layer, and a glass transition temperature (Tg) of the sealant layer, a method for preparing the pouch film, a secondary battery using the same, and a method for manufacturing the secondary battery.
[National Research and Development Project Supporting The Present Invention]
[Assignment unique number] 1415181922
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2022-09-01 ~ 2022-12-31
[Assignment unique number] 1415185612
[Assignment number] 20022450
[Name of ministry] Ministry of Trade, Industry and Energy
[Name of project management organization] Korea Institute of Industrial Technology Evaluation and Planning
[Research project name] Material/Parts Package Type (Top Company)
[Research assignment name] Development of a next-generation secondary battery pouch capable of realizing more than twice the high adhesive strength at 60°C
[Contribution rate] 1/1
[Name of agency in charge of assignment] Youlchon Chemical Co., Ltd.
[Research period] 2023-01-01 ~ 2023-12-31

### Background Art

Lithium secondary batteries (LiB) are being applied to many applications based on various advantages such as high energy density and excellent output.

As a laminated film for encasing a secondary battery, with a multi-layer structure that surrounds an electrode group and an electrolyte of the secondary battery, a secondary battery pouch film is a key component material that may determine the battery's stability, lifespan characteristics, and operational sustainability, and requires mechanical flexibility and strength, high oxygen/water vapor barrier properties, high thermal sealing strength, chemical resistance to electrolyte solutions, electrical insulation, and high temperature stability, etc.

A secondary battery pouch film typically consists of an outer layer, a barrier layer, and a sealant layer inside.

The outer layer or outermost layer is made of nylon, a blend of nylon and polyethylene terephthalate (PET), oriented polypropylene (OPP), polyethylene, and the like. The outer layer or outermost layer requires heat resistance, pinhole resistance, chemical resistance, formability, and insulation etc.

The barrier layer requires formability as well as barrier properties against water vapor and other gases. In this respect, metals with formability such as aluminum (Al), iron (Fe), copper (Cu), and nickel (Ni) etc. are used in the barrier layer, and aluminum is currently used the most.

Since the sealant layer which is an inner layer is in contact with the electrolyte, it requires electrolyte resistance, and insulation resistance etc. as well as thermal adhesiveness and formability.

As the application of lithium secondary batteries (LiB) is expanded from small-sized to medium-sized to large-sized fields such as automobiles and/or energy storage systems (ESS), secondary battery pouch films also need characteristics suitable for such medium-sized to large-sized fields that require high safety.

Accordingly, it is necessary to prepare pouch films which have excellent sealing strength not only at ambient temperature but especially at high temperature (60°C), and further it is necessary that their sealing strength is maintained without deterioration at ambient temperature and especially at high temperature. However, in the actual process of preparing pouch films used in medium-sized to large-sized secondary batteries, it is not easy to secure and maintain high sealing strength at ambient temperature and especially at high temperature.

### Disclosure of Invention

### Technical Problem

In exemplary embodiments of the present invention, in an aspect, an object is to provide a pouch film for a secondary battery that not only has excellent sealing strength at ambient temperature and high temperature, but also has excellent sealing strength maintenance at ambient temperature and especially at high temperature, and a method for preparing the same.

### Solution to Problem

In exemplary embodiments of the present invention, provided is a secondary battery pouch film including a layered structure wherein at least an outer layer, a barrier layer, and a sealant layer are structured in that order, wherein the sealant layer includes an extrusion (EC) layer and a polypropylene (PP) layer, and the extrusion (EC) layer is located on the barrier layer side relative to the polypropylene (PP) layer, wherein a thickness ratio of the polypropylene (PP) layer to the sealant layer including the extrusion (EC) layer and the polypropylene (PP) layer is more than 0.5, wherein an upper yield strength (N/mm²) in an MD direction of the sealant layer including the extrusion (EC) layer and the polypropylene (PP) layer is 17.50 to 19.99, preferably 17.50 to 19.80, and an upper yield strength (N/mm²) in a TD direction thereof is 17.00 to 19.99, preferably 17.00 to 19.50, wherein a glass transition temperature (Tg) of the sealant layer including the extrusion (EC) layer and the polypropylene (PP) layer is -20°C to -10°C.

In an exemplary embodiment, the sum of the upper yield strength (N/mm²) in the MD direction and the upper yield strength (N/mm²) in the TD direction of the sealant layer including the extrusion (EC) layer and the polypropylene (PP) layer may be 34.5 or more and 39.9 or less.

In an exemplary embodiment, the upper yield strength (N/mm²) in the MD direction of the sealant layer including the extrusion (EC) layer and the polypropylene (PP) layer may be more than the upper yield strength (N/mm²) in the TD direction thereof.

In an exemplary embodiment, when the secondary battery pouch film is sealed under a condition of sealing at 220°C, a measurement value of the maximum sealing strength of the secondary battery pouch film at ambient temperature in both the MD and TD directions, measured by the following method, may be 150 N or more and 205 N or less.

### [Method of measuring maximum sealing strength at ambient temperature when sealed under the condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in each of the MD and TD directions is measured at ambient temperature by a sealing strength meter, and the measurement is carried under a condition of a test speed of 10 mpm and a grip gap of 30 mm.

A maximum value of the sealing strength measurement values is a maximum sealing strength.

In an exemplary embodiment, when the secondary battery pouch film is sealed under the condition of sealing at 220°C, a measurement value of the maximum sealing strength of the secondary battery pouch film at high temperature (a sealing strength value measured after being left at 60°C for 3 minutes), measured by the following method, may be 115 N or more and 170 N or less in at least one of the MD and TD directions.

### [Method of measuring maximum sealing strength at high temperature when sealed under the condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength of a specimen in at least one of the MD and TD directions is measured after being left at 60°C for 3 minutes by a sealing strength meter, and the measurement is carried under a condition of a test speed of 10 mpm and a grip gap of 30 mm.

A maximum value of the sealing strength measurement values is a maximum sealing strength.

In an exemplary embodiment, the secondary battery pouch film may have the following maximum sealing strength parameter of 1.1 or more and 1.8 or less with respect to the maximum sealing strength when sealed under the condition of sealing at 220°C.

### [Maximum sealing strength parameter]

(the maximum sealing strength in the MD direction at ambient temperature x the maximum sealing strength in the TD direction at ambient temperature) / (the maximum sealing strength in the MD direction at high temperature x the maximum sealing strength in the TD direction at high temperature)

In an exemplary embodiment, the secondary battery pouch film may have an ambient temperature energy of 2.0 to 3.0 KN x mm in the TD direction, when sealed under the condition of sealing at 220°C, measured by the following method.

### [Measurement of ambient temperature energy in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) that a sealing part is pulled in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the integral value is obtained by integrating the stroke in the range of 0 mm to 20 mm.

In an exemplary embodiment, the secondary battery pouch film may have a high temperature energy of 1.5 to 2.5 KN x mm in the TD direction, when sealed under the condition of sealing at 220°C, measured by the following method.

### [Measurement of high temperature energy in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm, a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the integral value is obtained by integrating the stroke in the range of 0 mm to 20 mm.

In an exemplary embodiment, when sealed under the condition of sealing at 220°C, the difference between the ambient temperature energy and the high temperature energy of the secondary battery pouch film in the TD direction, measured by the following method, may be 0.4 KN x mm to 0.6 KN x mm.

### [Measurement of ambient temperature energy and high temperature energy in the TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The change in the sealing strength is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, wherein the integral value is obtained by integrating the stroke in the range of 0 mm to 20 mm.

The energy measured at ambient temperature is an ambient temperature energy, and the energy measured at high temperature is a high temperature energy.

In an exemplary embodiment, the secondary battery pouch film may have a maximum stroke of 15 mm to 25 mm in the TD direction at ambient temperature, when sealed under the condition of sealing at 220°C, measured by the following method.

### [Measurement of ambient temperature maximum stroke in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at ambient temperature, and the measurement is carried under a condition of a test speed of 10 mpm and a grip gap of 30 mm.

When the X-axis is a stroke (distance) of pulling the sealing part in the TD direction and the Y-axis is the sealing strength, a sealing strength curve increases as the stroke increases, and the stroke (distance) at which the sealing strength value is maximum is evaluated as a maximum stroke.

In an exemplary embodiment, the secondary battery pouch film may have a maximum stroke of 18 mm to 24 mm at high temperature in the TD direction, when sealed under the condition of sealing at 220°C, measured by the following method.

### [Measurement of high temperature maximum stroke in TD direction when sealed under condition of sealing at 220°C]

After producing a secondary battery pouch film in the size of 100 mm x 200 mm, the secondary battery pouch film is folded in half and sealed, and then cut to a size of 15 mm in width in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength change is measured by pulling the specimen in the TD direction with the sealing strength meter at high temperature after being left for 3 minutes at 60°C, and the measurement is carried under a condition of a test speed of 10 mpm and a grip gap of 30 mm.

When the X-axis is a stroke (distance) of puling the sealing part in the TD direction and the Y-axis is the sealing strength, the sealing strength curve gradually increases as the stroke increases, and the stroke (distance) at which the sealing strength value is maximum is evaluated as the maximum stroke.

In addition, in an exemplary embodiment of the present invention, provided is a method for preparing a secondary battery pouch film, wherein the secondary battery pouch film includes at least an outer layer, a barrier layer, and a sealant layer which are structured (or laminated) in that order, wherein the sealant layer includes an extrusion (EC) layer and a polypropylene (PP) layer, and the extrusion (EC) layer is located on the barrier layer side relative to the polypropylene (PP) layer, the method including preparing the sealant layer having a thickness ratio of the polypropylene (PP) layer to the sealant layer which is more than 0.5 when forming the extrusion (EC) layer on the polypropylene (PP) layer of the sealant layer, wherein an upper yield strength (N/mm²) in the MD direction of the sealant layer including the extrusion (EC) layer and the polypropylene (PP) layer is 17.50 to 19.99, preferably 17.50 to 19.80, and an upper yield strength (N/mm²) in the TD direction thereof is 17.00 to 19.99, preferably 17.00 to 19.50, wherein the glass transition temperature (Tg) of the sealant layer including the extrusion (EC) layer and the polypropylene (PP) layer is -20°C to -10°C.

Additionally, in exemplary embodiments of the present invention, provided is a secondary battery externally encased with the aforementioned secondary battery pouch film.

In an exemplary embodiment, the secondary battery may be used for an electric vehicle or an energy storage device.

Additionally, in exemplary embodiments of the present invention, provided is a manufacturing method of a secondary battery, including encasing the secondary battery with the aforementioned secondary battery pouch film.

### Advantageous Effects of Invention

A pouch film of exemplary embodiments of the present invention not only has excellent sealing strength at ambient temperature and high temperature, but also has excellent sealing strength maintenance at ambient temperature and high temperature by controlling a yield strength, a thickness ratio between an extrusion (EC) layer and a polypropylene (PP) layer, and a glass transition temperature of a sealant layer.

This secondary battery pouch film is useful as a pouch for a medium-sized to large-sized secondary battery in an electric vehicle or an energy storage device that requires safety, especially high-temperature safety.

### Brief Description of Drawings

The above and other aspects, features and advantages of the disclosed exemplary embodiments will be more apparent from the following detailed description taken in conjunction with the accompanying drawings in which:
FIG. 1 is a schematic diagram showing the configuration of a secondary battery pouch film prepared by an EC method.
FIG. 2A is a schematic diagram of a jig used in the Experiment, and FIG. 2B is a photograph of a battery pack sample coupled to the jig in the Experiment.

### Mode for the Invention

Exemplary embodiments are described more fully hereinafter. The invention may, however, be embodied in many different forms and should not be construed as limited to the exemplary embodiments set forth herein. Rather, these exemplary embodiments are provided so that this disclosure will be thorough and complete, and will fully convey the scope of the invention to those skilled in the art. In the description, details of features and techniques may be omitted to more clearly disclose exemplary embodiments.

### Term Definition

In this disclosure, when a secondary battery pouch film includes layer(s), the secondary battery pouch does not necessarily consist of only that layer, and additional layers may be included therein.

In this disclosure, being formed "on" a specific layer includes not only being formed directly on that layer, but also being formed after interposing another additional layer in between.

In this disclosure, a specimen stretches in proportion to an increase in load, but when exceeding the elastic limit, it begins to stretch out of proportion to the load. This point is called a yield point, and a force applied to the yield point is called a yield strength.

In this disclosure, an upper yield strength refers to a maximum value (peak value) of the yield strength. That is, the yield point includes an upper yield point (the point where the yield strength is the maximum among yield points) and a less yield point (the point where the yield strength is the minimum among yield points), wherein the upper yield strength refers to the maximum value (peak value) of the yield strength at the yield point [i.e., a yield strength at the upper yield point], and the less yield strength refers to a minimum value of the yield strength at the yield point [i.e., a yield strength at the less yield point]. Depending on a yield strength measurement target, the upper yield point and less yield point may be the same.

In this disclosure, an extrusion coating (EC) layer refers to an extrusion coating layer among the sealant layer [hereinafter, referred to as an extrusion layer or an extrusion (EC) layer] wherein a resin such as a polyolefin-based resin has been extrusion-coated for lamination with the barrier layer. The extrusion (EC) layer of the sealant layer is located on the barrier layer side relative to the polypropylene-based resin layer as described below.

In this disclosure, the polypropylene-based resin layer of the sealant layer is a core resin layer that makes up the sealant layer, plays a sealing role, and consists of one or more layers. It is contrasted with the above-described extruded (EC) layer for laminating with the barrier layer and is located on the inside of the pouch film (i.e., on the opposite side of the barrier layer) relative to the above-described extruded (EC) layer.

In this disclosure, energy refers to an item that evaluates the sealing strength maintenance characteristics, and corresponds to an area in a stroke section (0 to 20mm) of a graph for sealing strength change when measuring the sealing strength change (Y-axis) according to a stroke (distance) [X-axis] of pulling a sealing part, i.e., an integral value of the graph for sealing strength change in the stroke section (0 to 20mm) according to the stroke (distance) [X-axis]. It can be expressed as energy since the integral value is obtained by multiplying the force by the distance.

In this disclosure, a maximum stroke is also an item that can evaluate the sealing strength maintenance characteristics. As the stroke (distance) pulling the sealing part increases, the sealing strength increases, and the stroke (distance) at which the sealing strength value reaches its maximum is called the maximum stroke.

### Description of Exemplary Embodiments

Exemplary embodiments of the present invention are described in detail below.

A method for preparing a sealant layer when manufacturing a secondary battery pouch film may include an extrusion lamination and a solvent-dry lamination (hereinafter referred to as SDL).

The SDL is a technique of adhering a barrier layer (metal layer) onto a polypropylene (PP) layer using a solvent-type adhesive and drying the solvent-type adhesive, and a sealant layer produced according to the aforementioned technique is made up of the polypropylene (PP) layer. The solvent-type adhesive may remain in the polypropylene (PP) layer after drying, but since its thickness is about 4*µ*m or less and is insignificant, the thickness may be ignored.

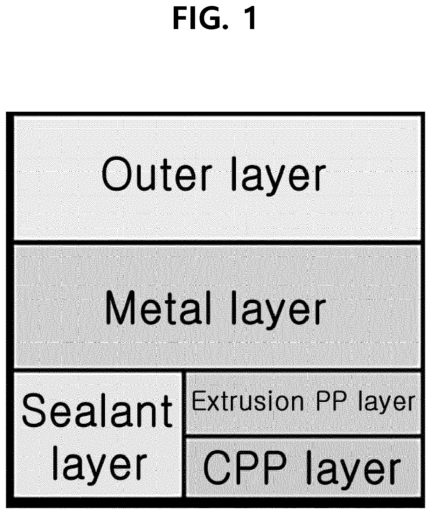

The extrusion lamination is a technique of extruding a polyolefin based resin, preferably a polypropylene resin, when adhering polypropylene based resin layer, especially cast polypropylene (CPP) resin layer, which is mainly used in the sealant layer, to the barrier layer (metal layer). As a result, the sealant layer is composed of an extrusion coating (EC) layer (mainly an extrusion polypropylene layer) and the polypropylene (PP) layer below the extrusion (EC) layer (the inside of the pouch film), preferably the cast polypropylene (CPP) layer (see FIG. 1).

The present inventors conducted repeated research and arrived at the present invention after confirming that the secondary battery pouch film not only has excellent sealing strength at ambient temperature, but also has excellent sealing strength at high temperature, and especially excellent sealing strength maintenance at high temperature when a yield strength of the sealant layer is controlled while the relative thickness of the extrusion (EC) layer and the polypropylene (PP) layer of the sealant layer is controlled [or the thickness ratio of the polypropylene (PP) layer to the sealant layer is controlled], and a glass transition temperature (Tg) of the sealant layer is controlled in the extrusion lamination manufacturing method.

The sealing strength, especially the sealing strength at high temperature, is an essential characteristic for the safety of medium-sized to large-sized batteries such as automobile batteries, and it is necessary to maintain the sealing strength at high temperature as much as possible, to ensure the safety of medium-sized to large-sized batteries in high-temperature environments. However, when manufacturing a pouch film, multiple layers are laminated and various manufacturing conditions are involved in the manufacture of the sealant layer, so it is difficult to control the sealing strength, especially the sealing strength at high temperature, and especially the sealing strength maintenance at the high temperature. As mentioned above, in the present invention, it is found that the pouch film with excellent sealing strength at ambient and high temperature, as well as excellent sealing strength maintenance at high temperature is produced by controlling the thickness ratio of the polypropylene resin (PP) layer to the sealant layer while ensuring that the sealant layer has a controlled yield strength, and the sealant layer has a controlled glass transition temperature (Tg). When using the extrusion lamination, it is understood that the yield strength of the sealant layer of the pouch film, the thickness ratio of the polypropylene resin (PP) layer to the sealant layer, and the glass transition temperature (Tg) of the sealant layer are related to the sealing strength at ambient and high temperature, especially sealing strength maintenance at high temperature.

Specifically, in exemplary embodiments of the present invention, a secondary battery pouch film includes a layered structure wherein at least an outer layer, a barrier layer, and a sealant layer are structured in that order, wherein the sealant layer includes an extrusion (EC) layer and a polypropylene (PP) layer, and the extrusion (EC) layer is located on the barrier layer side relative to the polypropylene (PP) layer, wherein a thickness ratio of the polypropylene (PP) layer to the sealant layer including the extrusion (EC) layer and the polypropylene (PP) layer is more than 0.5, wherein an upper yield strength (N/mm²) in an MD direction of the sealant layer including the extrusion (EC) layer and the polypropylene (PP) layer is 17.50 to 19.99, preferably 17.50 to 19.80, and an upper yield strength (N/mm²) in a TD direction thereof is 17.00 to 19.99, preferably 17.00 to 19.50, wherein a glass transition temperature (Tg) of the sealant layer including the extrusion (EC) layer and the polypropylene (PP) layer is -20°C to -10°C.

In an exemplary embodiment, a thickness ratio of the polypropylene (PP) layer to the sealant layer may be 0.500 or more, 0.525 or more, 0.550 or more, 0.575 or more, 0.600 or more, 0.625 or more, 0.650 or more, 0.675 or more, 0.700 or more, 0.725 or more, 0.750 or more, or 0.775 or more. Alternatively, the thickness ratio of the polypropylene (PP) layer to the sealant layer may be 0.800 or less, 0.775 or less, 0.750 or less, 0.725 or less, 0.700 or less, 0.675 or less, 0.650 or less, 0.625 or less, 0.600 or less, 0.575 or less, 0.550 or less, or 0.525 or less.

When the thickness ratio is less than 0.5, that is, when the thickness of the polypropylene (PP) layer is less than half the thickness of the sealant layer, the yield strength may be lowered and thus the sealing strength may be lowered. However, when the thickness ratio is more than 0.8, that is, when the thickness of the polypropylene (PP) layer is thicker than 80% of the total thickness of the sealant layer, the peeling strength between the barrier layer and the sealant layer may decrease, thereby lowering the sealing strength.

The fact that the thickness ratio of the polypropylene (PP) layer to the sealant layer is 0.500 or more means that the thickness of the extrusion (EC) layer is thinner than the thickness of the polypropylene (PP) layer.

In an exemplary embodiment, the upper yield strength (N/mm²) in the MD direction of the sealant layer may be within the range of 17.50 to 19.99, and may also have a numerical range between the following values present within the range. If the upper yield strength (N/mm²) of the sealant layer in the MD direction is outside the above range, the sealing strength characteristics at ambient temperature and high temperature, especially sealing strength maintenance characteristics at high temperature may be deteriorated, as can be seen from data described below.

In a non-limiting example, the upper yield strength (N/mm²) in the MD direction of the sealant layer may be 17.50 or more, 17.51 or more or 17.51 or less, 17.52 or more or 17.52 or less, 17.53 or more or 17.53 or less, 17.54 or more or 17.54 or less, 17.55 or more or 17.55 or less, 17.56 or more or 17.56 or less, 17.57 or more or 17.57 or less, 17.58 or more or 17.58 or less, 17.59 or more or 17.59 or less, 17.60 or more or 17.60 or less, 17.61 or more or 17.61 or less, 17.62 or more or 17.62 or less, 17.63 or more or 17.63 or less, 17.64 or more or 17.64 or less, 17.65 or more or 17.65 or less, 17.66 or more or 17.66 or less, 17.67 or more or 17.67 or less, 17.68 or more or 17.68 or less, 17.69 or more or 17.69 or less, 17.70 or more or 17.70 or less, 17.71 or more or 17.71 or less, 17.72 or more or 17.72 or less, 17.73 or more or 17.73 or less, 17.74 or more or 17.74 or less, 17.75 or more or 17.75 or less, 17.76 or more or 17.76 or less, 17.77 or more or 17.77 or less, 17.78 or more or 17.78 or less, 17.79 or more or 17.79 or less, 17.80 or more or 7.80 or less, 17.81 or more or 17.81 or less, 17.82 or more or 17.82 or less, 17.83 or more or 17.83 or less, 17.84 or more or 17.84 or less, 17.85 or more or 17.85 or less, 17.86 or more or 17.86 or less, 17.87 or more or 17.87 or less, 17.88 or more or 17.88 or less, 17.89 or more or 17.89 or less, 17.90 or more or 17.90 or less, 17.91 or more or 17.91 or less, 17.92 or more or 17.92 or less, 17.93 or more or 17.93 or less, 17.94 or more or 17.94 or less, 17.95 or more or 17.95 or less, 17.96 or more or 17.96 or less, 17.97 or more or 17.97 or less, 17.98 or more or 17.98 or less, 17.99 or more or 17.99 or less, 18.00 or more or 18.00 or less, 18.01 or more or 18.01 or less, 18.02 or more or 18.02 or less, 18.03 or more or 18.03 or less, 18.04 or more or 18.04 or less, 18.05 or more or 18.05 or less, 18.06 or more or 18.06 or less, 18.07 or more or 18.07 or less, 18.08 or more or 18.08 or less, 18.09 or more or 18.09 or less, 18.10 or more or 18.10 or less, 18.11 or more or 18.11 or less, 18.12 or more or 18.12 or less, 18.13 or more or 18.13 or less, 18.14 or more or 18.14 or less, 18.15 or more or 18.15 or less, 18.16 or more or 18.16 or less, 18.17 or more or 18.17 or less, 18.18 or more or 18.18 or less, 18.19 or more or 18.19 or less, 18.20 or more or 18.20 or less, 18.21 or more or 18.21 or less, 18.22 or more or 18.22 or less, 18.23 or more or 18.23 or less, 18.24 or more or 18.24 or less, 18.25 or more or 18.25 or less, 18.26 or more or 18.26 or less, 18.27 or more or 18.27 or less, 18.28 or more or 18.28 or less, 18.29 or more or 18.29 or less, 18.30 or more or 18.30 or less, 18.31 or more or 18.31 or less, 18.32 or more or 18.32 or less, 18.33 or more or 18.33 or less, 18.34 or more or 18.34 or less, 18.35 or more or 18.35 or less, 18.36 or more or 18.36 or less, 18.37 or more or 18.37 or less, 18.38 or more or 18.38 or less, 18.39 or more or 18.39 or less, 18.40 or more or 18.40 or less, 18.41 or more or 18.41 or less, 18.42 or more or 18.42 or less, 18.43 or more or 18.43 or less, 18.44 or more or 18.44 or less, 18.45 or more or 18.45 or less, 18.46 or more or 18.46 or less, 18.47 or more or 18.47 or less, 18.48 or more or 18.48 or less, 18.49 or more or 18.49 or less, 18.50 or more or 18.50 or less, 18.51 or more or 18.51 or less, 18.52 or more or 18.52 or less, 18.53 or more or 18.53 or less, 18.54 or more or 18.54 or less, 18.55 or more or 18.55 or less, 18.56 or more or 18.56 or less, 18.57 or more or 18.57 or less, 18.58 or more or 18.58 or less, 18.59 or more or 18.59 or less, 18.60 or more or 18.60 or less, 18.61 or more or 18.61 or less, 18.62 or more or 18.62 or less, 18.63 or more or 18.63 or less, 18.64 or more or 18.64 or less, 18.65 or more or 18.65 or less, 18.66 or more or 18.66 or less, 18.67 or more or 18.67 or less, 18.68 or more or 18.68 or less, 18.69 or more or 18.69 or less, 18.70 or more or 18.70 or less, 18.71 or more or 18.71 or less, 18.72 or more or 18.72 or less, 18.73 or more or 18.73 or less, 18.74 or more or 18.74 or less, 18.75 or more or 18.75 or less, 18.76 or more or 18.76 or less, 18.77 or more or 18.77 or less, 18.78 or more or 18.78 or less, 18.79 or more or 18.79 or less, 18.80 or more or 18.80 or less, 18.81 or more or 18.81 or less, 18.82 or more or 18.82 or less, 18.83 or more or 18.83 or less, 18.84 or more or 18.84 or less, 18.85 or more or 18.85 or less, 18.86 or more or 18.86 or less, 18.87 or more or 18.87 or less, 18.88 or more or 18.88 or less, 18.89 or more or 18.89 or less, 18.90 or more or 18.90 or less, 18.91 or more or 18.91 or less, 18.92 or more or 18.92 or less, 18.93 or more or 18.93 or less, 18.94 or more or 18.94 or less, 18.95 or more or 18.95 or less, 18.96 or more or 18.96 or less, 18.97 or more or 18.97 or less, 18.98 or more or 18.98 or less, 18.99 or more or 18.99 or less, 19.00 or more or 19.00 or less, 19.01 or more or 19.01 or less, 19.02 or more or 19.02 or less, 19.03 or more or 19.03 or less, 19.04 or more or 19.04 or less, 19.05 or more or 19.05 or less, 19.06 or more or 19.06 or less, 19.07 or more or 19.07 or less, 19.08 or more or 19.08 or less, 19.09 or more or 19.09 or less, 19.10 or more or 19.10 or less, 19.11 or more or 19.11 or less, 19.12 or more or 19.12 or less, 19.13 or more or 19.13 or less, 19.14 or more or 19.14 or less, 19.15 or more or 19.15 or less, 19.16 or more or 19.16 or less, 19.17 or more or 19.17 or less, 19.18 or more or 19.18 or less, 19.19 or more or 19.19 or less, 19.20 or more or 19.20 or less, 19.21 or more or 19.21 or less, 19.22 or more or 19.22 or less, 19.23 or more or 19.23 or less, 19.24 or more or 19.24 or less, 19.25 or more or 19.25 or less, 19.26 or more or 19.26 or less, 19.27 or more or 19.27 or less, 19.28 or more or 19.28 or less, 19.29 or more or 19.29 or less, 19.30 or more or 19.30 or less, 19.31 or more or 19.31 or less, 19.32 or more or 19.32 or less, 19.33 or more or 19.33 or less, 19.34 or more or 19.34 or less, 19.35 or more or 19.35 or less, 19.36 or more or 19.36 or less, 19.37 or more or 19.37 or less, 19.38 or more or 19.38 or less, 19.39 or more or 19.39 or less, 19.40 or more or 19.40 or less, 19.41 or more or 19.41 or less, 19.42 or more or 19.42 or less, 19.43 or more or 19.43 or less, 19.44 or more or 19.44 or less, 19.45 or more or 19.45 or less, 19.46 or more or 19.46 or less, 19.47 or more or 19.47 or less, 19.48 or more or 19.48 or less, 19.49 or more or 19.49 or less, 19.50 or more or 19.50 or less, 19.51 or more or 19.51 or less, 19.52 or more or 19.52 or less, 19.53 or more or 19.53 or less, 19.54 or more or 19.54 or less, 19.55 or more or 19.55 or less, 19.56 or more or 19.56 or less, 19.57 or more or 19.57 or less, 19.58 or more or 19.58 or less, 19.59 or more or 19.59 or less, 19.60 or more or 19.60 or less, 19.61 or more or 19.61 or less, 19.62 or more or 19.62 or less, 19.63 or more or 19.63 or less, 19.64 or more or 19.64 or less, 19.65 or more or 19.65 or less, 19.66 or more or 19.66 or less, 19.67 or more or 19.67 or less, 19.68 or more or 19.68 or less, 19.69 or more or 19.69 or less, 19.70 or more or 19.70 or less, 19.71 or more or 19.71 or less, 19.72 or more or 19.72 or less, 19.73 or more or 19.73 or less, 19.74 or more or 19.74 or less, 19.75 or more or 19.75 or less, 19.76 or more or 19.76 or less, 19.77 or more or 19.77 or less, 19.78 or more or 19.78 or less, 19.79 or more or 19.79 or less, 19.80 or more or 19.80 or less, 19.81 or more or 19.81 or less, 19.82 or more or 19.82 or less, 19.83 or more or 19.83 or less, 19.84 or more or 19.84 or less, 19.85 or more or 19.85 or less, 19.86 or more or 19.86 or less, 19.87 or more or 19.87 or less, 19.88 or more or 19.88 or less, 19.89 or more or 19.89 or less, 19.90 or more or 19.90 or less, 19.91 or more or 19.91 or less, 19.92 or more or 19.92 or less, 19.93 or more or 19.93 or less, 19.94 or more or 19.94 or less, 19.95 or more or 19.95 or less, 19.96 or more or 19.96 or less, 19.97 or more or 19.97 or less, 19.98 or more or 19.98 or less, or 19.99 or less.

In an exemplary embodiment, the upper yield strength (N/mm²) in the TD direction of the sealant layer may be within the range of 17.00 to 19.99, and may have a numerical range between the following values present within that range. If the upper yield strength (N/mm²) of the sealant layer in the TD direction is outside the above range, the sealing strength characteristics at ambient temperature and high temperature, especially sealing strength maintenance characteristics at high temperature may be deteriorated, as can be seen from data described below.

In a non-limiting example, the upper yield strength (N/mm²) in the TD direction of the sealant layer may be 17.00 or more, 17.01 or more or 17.01 or less, 17.02 or more or 17.02 or less, 17.03 or more or 17.03 or less, 17.04 or more or 17.04 or less, 17.05 or more or 17.05 or less, 17.06 or more or 17.06 or less, 17.07 or more or 17.07 or less, 17.08 or more or 17.08 or less, 17.09 or more or 17.09 or less, 17.10 or more or 17.10 or less, 17.11 or more or 17.11 or less, 17.12 or more or 17.12 or less, 17.13 or more or 17.13 or less, 17.14 or more or 17.14 or less, 17.15 or more or 17.15 or less, 17.16 or more or 17.16 or less, 17.17 or more or 17.17 or less, 17.18 or more or 17.18 or less, 17.19 or more or 17.19 or less, 17.20 or more or 17.20 or less, 17.21 or more or 17.21 or less, 17.22 or more or 17.22 or less, 17.23 or more or 17.23 or less, 17.24 or more or 17.24 or less, 17.25 or more or 17.25 or less, 17.26 or more or 17.26 or less, 17.27 or more or 17.27 or less, 17.28 or more or 17.28 or less, 17.29 or more or 17.29 or less, 17.30 or more or 17.30 or less, 17.31 or more or 17.31 or less, 17.32 or more or 17.32 or less, 17.33 or more or 17.33 or less, 17.34 or more or 17.34 or less, 17.35 or more or 17.35 or less, 17.36 or more or 17.36 or less, 17.37 or more or 17.37 or less, 17.38 or more or 17.38 or less, 17.39 or more or 17.39 or less, 17.40 or more or 17.40 or less, 17.41 or more or 17.41 or less, 17.42 or more or 17.42 or less, 17.43 or more or 17.43 or less, 17.44 or more or 17.44 or less, 17.45 or more or 17.45 or less, 17.46 or more or 17.46 or less, 17.47 or more or 17.47 or less, 17.48 or more or 17.48 or less, 17.49 or more or 17.49 or less, 17.50 or more or 17.50 or less, 17.51 or more or 17.51 or less, 17.52 or more or 17.52 or less, 17.53 or more or 17.53 or less, 17.54 or more or 17.54 or less, 17.55 or more or 17.55 or less, 17.56 or more or 17.56 or less, 17.57 or more or 17.57 or less, 17.58 or more or 17.58 or less, 17.59 or more or 17.59 or less, 17.60 or more or 17.60 or less, 17.61 or more or 17.61 or less, 17.62 or more or 17.62 or less, 17.63 or more or 17.63 or less, 17.64 or more or 17.64 or less, 17.65 or more or 17.65 or less, 17.66 or more or 17.66 or less, 17.67 or more or 17.67 or less, 17.68 or more or 17.68 or less, 17.69 or more or 17.69 or less, 17.70 or more or 17.70 or less, 17.71 or more or 17.71 or less, 17.72 or more or 17.72 or less, 17.73 or more or 17.73 or less, 17.74 or more or 17.74 or less, 17.75 or more or 17.75 or less, 17.76 or more or 17.76 or less, 17.77 or more or 17.77 or less, 17.78 or more or 17.78 or less, 17.79 or more or 17.79 or less, 17.80 or more or 17.80 or less, 17.81 or more or 17.81 or less, 17.82 or more or 17.82 or less, 17.83 or more or 17.83 or less, 17.84 or more or 17.84 or less, 17.85 or more or 17.85 or less, 17.86 or more or 17.86 or less, 17.87 or more or 17.87 or less, 17.88 or more or 17.88 or less, 17.89 or more or 17.89 or less, 17.90 or more or 17.90 or less, 17.91 or more or 17.91 or less, 17.92 or more or 17.92 or less, 17.93 or more or 17.93 or less, 17.94 or more or 17.94 or less, 17.95 or more or 17.95 or less, 17.96 or more or 17.96 or less, 17.97 or more or 17.97 or less, 17.98 or more or 17.98 or less, 17.99 or more or 17.99 or less, 18.00 or more or 18.00 or less, 18.01 or more or 18.01 or less, 18.02 or more or 18.02 or less, 18.03 or more or 18.03 or less, 18.04 or more or 18.04 or less, 18.05 or more or 18.05 or less, 18.06 or more or 18.06 or less, 18.07 or more or 18.07 or less, 18.08 or more or 18.08 or less, 18.09 or more or 18.09 or less, 18.10 or more or 18.10 or less, 18.11 or more or 18.11 or less, 18.12 or more or 18.12 or less, 18.13 or more or 18.13 or less, 18.14 or more or 18.14 or less, 18.15 or more or 18.15 or less, 18.16 or more or 18.16 or less, 18.17 or more or 18.17 or less, 18.18 or more or 18.18 or less, 18.19 or more or 18.19 or less, 18.20 or more or 18.20 or less, 18.21 or more or 18.21 or less, 18.22 or more or 18.22 or less, 18.23 or more or 18.23 or less, 18.24 or more or 18.24 or less, 18.25 or more or 18.25 or less, 18.26 or more or 18.26 or less, 18.27 or more or 18.27 or less, 18.28 or more or 18.28 or less, 18.29 or more or 18.29 or less, 18.30 or more or 18.30 or less, 18.31 or more or 18.31 or less, 18.32 or more or 18.32 or less, 18.33 or more or 18.33 or less, 18.34 or more or 18.34 or less, 18.35 or more or 18.35 or less, 18.36 or more or 18.36 or less, 18.37 or more or 18.37 or less, 18.38 or more or 18.38 or less, 18.39 or more or 18.39 or less, 18.40 or more or 18.40 or less, 18.41 or more or 18.41 or less, 18.42 or more or 18.42 or less, 18.43 or more or 18.43 or less, 18.44 or more or 18.44 or less, 18.45 or more or 18.45 or less, 18.46 or more or 18.46 or less, 18.47 or more or 18.47 or less, 18.48 or more or 18.48 or less, 18.49 or more or 18.49 or less, 18.50 or more or 18.50 or less, 18.51 or more or 18.51 or less, 18.52 or more or 18.52 or less, 18.53 or more or 18.53 or less, 18.54 or more or 18.54 or less, 18.55 or more or 18.55 or less, 18.56 or more or 18.56 or less, 18.57 or more or 18.57 or less, 18.58 or more or 18.58 or less, 18.59 or more or 18.59 or less, 18.60 or more or 18.60 or less, 18.61 or more or 18.61 or less, 18.62 or more or 18.62 or less, 18.63 or more or 18.63 or less, 18.64 or more or 18.64 or less, 18.65 or more or 18.65 or less, 18.66 or more or 18.66 or less, 18.67 or more or 18.67 or less, 18.68 or more or 18.68 or less, 18.69 or more or 18.69 or less, 18.70 or more or 18.70 or less, 18.71 or more or 18.71 or less, 18.72 or more or 18.72 or less, 18.73 or more or 18.73 or less, 18.74 or more or 18.74 or less, 18.75 or more or 18.75 or less, 18.76 or more or 18.76 or less, 18.77 or more or 18.77 or less, 18.78 or more or 18.78 or less, 18.79 or more or 18.79 or less, 18.80 or more or 18.80 or less, 18.81 or more or 18.81 or less, 18.82 or more or 18.82 or less, 18.83 or more or 18.83 or less, 18.84 or more or 18.84 or less, 18.85 or more or 18.85 or less, 18.86 or more or 18.86 or less, 18.87 or more or 18.87 or less, 18.88 or more or 18.88 or less, 18.89 or more or 18.89 or less, 18.90 or more or 18.90 or less, 18.91 or more or 18.91 or less, 18.92 or more or 18.92 or less, 18.93 or more or 18.93 or less, 18.94 or more or 18.94 or less, 18.95 or more or 18.95 or less, 18.96 or more or 18.96 or less, 18.97 or more or 18.97 or less, 18.98 or more or 18.98 or less, 18.99 or more or 18.99 or less, 19.00 or more or 19.00 or less, 19.01 or more or 19.01 or less, 19.02 or more or 19.02 or less, 19.03 or more or 19.03 or less, 19.04 or more or 19.04 or less, 19.05 or more or 19.05 or less, 19.06 or more or 19.06 or less, 19.07 or more or 19.07 or less, 19.08 or more or 19.08 or less, 19.09 or more or 19.09 or less, 19.10 or more or 19.10 or less, 19.11 or more or 19.11 or less, 19.12 or more or 19.12 or less, 19.13 or more or 19.13 or less, 19.14 or more or 19.14 or less, 19.15 or more or 19.15 or less, 19.16 or more or 19.16 or less, 19.17 or more or 19.17 or less, 19.18 or more or 19.18 or less, 19.19 or more or 19.19 or less, 19.20 or more or 19.20 or less, 19.21 or more or 19.21 or less, 19.22 or more or 19.22 or less, 19.23 or more or 19.23 or less, 19.24 or more or 19.24 or less, 19.25 or more or 19.25 or less, 19.26 or more or 19.26 or less, 19.27 or more or 19.27 or less, 19.28 or more or 19.28 or less, 19.29 or more or 19.29 or less, 19.30 or more or 19.30 or less, 19.31 or more or 19.31 or less, 19.32 or more or 19.32 or less, 19.33 or more or 19.33 or less, 19.34 or more or 19.34 or less, 19.35 or more or 19.35 or less, 19.36 or more or 19.36 or less, 19.37 or more or 19.37 or less, 19.38 or more or 19.38 or less, 19.39 or more or 19.39 or less, 19.40 or more or 19.40 or less, 19.41 or more or 19.41 or less, 19.42 or more or 19.42 or less, 19.43 or more or 19.43 or less, 19.44 or more or 19.44 or less, 19.45 or more or 19.45 or less, 19.46 or more or 19.46 or less, 19.47 or more or 19.47 or less, 19.48 or more or 19.48 or less, 19.49 or more or 19.49 or less, 19.50 or more or 19.50 or less, 19.51 or more or 19.51 or less, 19.52 or more or 19.52 or less, 19.53 or more or 19.53 or less, 19.54 or more or 19.54 or less, 19.55 or more or 19.55 or less, 19.56 or more or 19.56 or less, 19.57 or more or 19.57 or less, 19.58 or more or 19.58 or less, 19.59 or more or 19.59 or less, 19.60 or more or 19.60 or less, 19.61 or more or 19.61 or less, 19.62 or more or 19.62 or less, 19.63 or more or 19.63 or less, 19.64 or more or 19.64 or less, 19.65 or more or 19.65 or less, 19.66 or more or 19.66 or less, 19.67 or more or 19.67 or less, 19.68 or more or 19.68 or less, 19.69 or more or 19.69 or less, 19.70 or more or 19.70 or less, 19.71 or more or 19.71 or less, 19.72 or more or 19.72 or less, 19.73 or more or 19.73 or less, 19.74 or more or 19.74 or less, 19.75 or more or 19.75 or less, 19.76 or more or 19.76 or less, 19.77 or more or 19.77 or less, 19.78 or more or 19.78 or less, 19.79 or more or 19.79 or less, 19.80 or more or 19.80 or less, 19.81 or more or 19.81 or less, 19.82 or more or 19.82 or less, 19.83 or more or 19.83 or less, 19.84 or more or 19.84 or less, 19.85 or more or 19.85 or less, 19.86 or more or 19.86 or less, 19.87 or more or 19.87 or less, 19.88 or more or 19.88 or less, 19.89 or more or 19.89 or less, 19.90 or more or 19.90 or less, 19.91 or more or 19.91 or less, 19.92 or more or 19.92 or less, 19.93 or more or 19.93 or less, 19.94 or more or 19.94 or less, 19.95 or more or 19.95 or less, 19.96 or more or 19.96 or less, 19.97 or more or 19.97 or less, 19.98 or more or 19.98 or less, or 19.99 or less.

In an exemplary embodiment, the sum of the upper yield strength (N/mm²) in the MD direction and the upper yield strength (N/mm²) in the TD direction of the sealant layer is 34.5 or more and 39.9 or less, preferably 34.5 or more and 39 or less, more preferably 34.61 to 38.85.

In an exemplary embodiment, the upper yield strength (N/mm²) of the sealant layer in the MD direction may be more than the upper yield strength (N/mm²) of the sealant layer in the TD direction. Due to the nature of the extrusion coating (EC) process and the nature of the lamination process using the polypropylene (PP) layer for the sealant layer, slight stretching may occur in the MD direction (machine direction or longitudinal direction). Accordingly, it is believed that the upper yield strength in the MD direction is greater than that in the TD direction (transverse direction) where stretching does not occur.

In an exemplary embodiment, the glass transition temperature (Tg) of the sealant layer may have a value within the range of -20°C to -10°C, preferably -19°C to -11°C, and may have a numerical range between the following values present within that range. If the glass transition temperature (Tg) of the sealant layer is outside the above range of -20°C to -10°C, the sealing strength, especially the sealing strength at high temperature, and especially the sealing strength maintenance at high temperature may be deteriorated, as can be seen from the data described below.

In a non-limiting example, the glass transition temperature (Tg) of the sealant layer may be -20°C or higher, -19.5°C or higher, -19°C or higher, -18.5°C or higher, -18°C or higher, -17.5°C or higher, -17°C or higher, -16.5°C or higher, -16°C or higher, -15.5°C or higher, -15°C or higher, -14.5°C or higher, -14°C or higher, -13.5°C or higher, -13°C or higher, -12.5°C or higher, -12°C or higher, -11.5°C or higher, -11°C or higher, or -10.5°C or higher Alternatively, the glass transition temperature (Tg) of the sealant layer may be -10°C or less, -10.5°C or less, -11°C or less, -11.5°C or less, -12°C or less, -12.5°C or less, -13°C or less, -13.5°C or less, -14°C or less, -14.5°C or less, -15°C or less, -15.5°C or less, -16°C or less, -16.5°C or less, -17°C or less, -17.5°C or less, -18°C or less, or -18.5°C or less.

In an exemplary embodiment, the measurement value of the maximum sealing strength (unit N/15mm) of the secondary battery pouch film at ambient temperature, when sealed under the condition of sealing at 220°C, measured by the following method, may be 150 N/15mm or more and 205 N/15mm or less in both the MD and TD directions.

In a non-limiting example, the measurement value of the maximum sealing strength at ambient temperature when sealed under the condition of sealing at 220°C in at least one of the MD direction and the TD direction may be 150 N/15mm or more, 155 N/15mm or more, 160 N/15mm or more, 165 N/15mm or more, 170 N/15mm or more, 175 N/15mm or more, 180 N/15mm or more, 185 N/15mm or more, 190 N/15mm or more, 195 N/15mm or more, or 200 N/15mm or more.

In an exemplary embodiment, the measurement value of the maximum sealing strength (unit N/15mm) of the secondary battery pouch film at high temperature (after being left for 3 minutes at 60°C), when sealed under the condition of sealing at 220°C, measured by the following method, may be 115 N/15mm or more and 170 N/15mm or less in at least one of the MD direction and the TD direction.

In a non-limiting example, the measurement value of the maximum sealing strength at high temperature (after being left for 3 minutes at 60°C) when sealed under the condition of sealing at 220°C in at least one of the MD direction and the TD direction may be 115 N/15mm or more, 120 N/15mm or more, 125 N/15mm or more, 130 N/15mm or more, 135 N/15mm or more, 140 N/15mm or more, 145 N/15mm or more, 150 N/15mm or more, 155 N/15mm or more, 160 N/15mm or more, or 165 N/15mm or more.

### [Method of measuring maximum sealing strength when sealed under the condition of sealing at 220°C]

A specimen is produced by producing a secondary battery pouch film in the size of 100 mm x 200 mm, folding in half and sealing the secondary battery pouch film, and then cutting it into pieces with a width of 15 mm in a direction perpendicular to the sealing direction.

The sealing is carried under a sealing condition of a seal bar width of 200 mm x a seal thickness of 10 mm, 2.0 seconds, 0.2 MPa, and a temperature of 220°C.

The sealing strength (load) of the specimen in the MD and TD directions is measured by pulling the specimen with a sealing strength meter (e.g., SHIMADZU's AGS-X model UTM equipment), and the measurement is carried under a condition of a test speed of 10 mpm and a grip gap of 30 mm.

In the case of ambient temperature measurement, the value was measured at ambient temperature, and in the case of high temperature measurement, the value was measured after being left for 3 minutes at 60°C. When measuring the sealing strength while pulling a sealing part, the maximum strength is indicated as the maximum sealing strength.

In an exemplary embodiment, the secondary battery pouch film has the following maximum sealing strength parameter of 1.1 or more and 1.8 or less with respect to the maximum sealing strength when sealed under the condition of sealing at 220°C.

### [Maximum sealing strength parameter]

(the maximum sealing strength in the MD direction at ambient temperature x the maximum sealing strength in the TD direction at ambient temperature) / (the maximum sealing strength in the MD direction at high temperature x the maximum sealing strength in the TD direction at high temperature)

In a non-limiting example, the maximum sealing strength parameter may be within a range between any two values among, e.g., 1.1, 1.15, 1.20, 1.25, 1.30, 1.35, 1.40, 1.45, 1.50, 1.55, 1.60, 1.65, 1.70, 1.75, 1.80.

In an exemplary embodiment, the ambient temperature energy of the secondary battery pouch film measured by the method below is 2.0 to 3.0 KN x mm.

In an exemplary embodiment, the high-temperature energy of the secondary battery pouch film measured by the method below is 1.5 to 2.5 KN x mm.

In an exemplary embodiment, the difference between the ambient temperature energy and the high temperature energy of the secondary battery pouch film measured by the method below is 0.4 to 0.6 KN x mm.

### [Measurement of ambient temperature energy and high temperature energy]

The ambient temperature energy or the high temperature energy at the ambient or high temperature (measured after being left for 3 minutes at 60°C) was measured in the same manner as the sealing strength measurement method described above, and when the X-axis is a stroke (distance) of pulling a sealing part and the Y-axis is a sealing strength, the ambient temperature energy or the high temperature energy is an area between the sealing strength graph according to the stroke and the X-axis representing the stroke (i.e., an integral value between the sealing strength graph and the X-axis), where the stroke range for an integration is from 0 mm to 20 mm.

In an exemplary embodiment, the maximum stroke of the secondary battery pouch film at ambient temperature measured by the method below is 15 mm to 25 mm.

In an exemplary embodiment, the maximum stroke of the secondary battery pouch film at high temperature measured by the method below is 18 mm to 24 mm.

### [Measurement of ambient temperature maximum stroke and high temperature maximum stroke]

The maximum stroke at ambient or high temperature (measured after being left for 3 minutes at 60°C) is measured in the same manner as the sealing strength measurement method described above, and when the X-axis is a stroke (distance) of pulling the sealing part and the Y-axis is the sealing strength, a sealing strength curve increases as the stroke increases, and the stroke (distance) at which the sealing strength value is maximum is evaluated as a maximum stroke. If evaluated at ambient temperature, the maximum stroke is an ambient temperature maximum stroke, and if evaluated at high temperature, the maximum stroke is a high temperature maximum stroke.

In an exemplary embodiment, the outer layer may be composed of nylon, polyethylene terephthalate (PET), polybutylene terephthalate (PBT), or a mixed layer of nylon and PET (a laminated film of nylon and PET).

In an exemplary embodiment, the nylon film of the outer layer preferably has a thickness of 20 *µ*m or more, and more preferably 25 *µ*m or more, in terms of formability. However, if the thickness of the nylon film exceeds 30 *µ*m, the breakdown voltage may decrease. Accordingly, a preferred nylon film thickness may be 20 µm to 30 µm, preferably 25 µm to 30 µm.

In an exemplary embodiment, the thinner the PET film and the thicker the nylon film in the outer layer, the more advantageous it is for moldability. However, the thinner the PET film, the more disadvantageous it may be in terms of breakdown voltage, so from this point of view, it is preferable that the thickness of the PET film is 7 *µ*m to 12 *µ*m.

In an exemplary embodiment, the metal layer may be composed of metals such as aluminum, SUS, and copper, etc., and has moisture permeability and impact resistance.

In an exemplary embodiment, the cast polypropylene (CPP) layer or the cast polypropylene (CPP) film of the sealant layer may contain various additives (rubber, elastomer, slip agent, etc.) depending on the required physical properties.

In an exemplary embodiment, the total thickness of the secondary battery pouch film may be, for example, 60 µm to 185 µm. In an embodiment, the total thickness of the secondary battery pouch film may be 153 *µ*m or more or 113 *µ*m or less.

In an exemplary embodiment, the thickness of the metal layer may be, for example, 20 µm to 80 µm, preferably 40 µm to 60 µm.

In an exemplary embodiment, the thickness of the sealant layer may be, for example, 20 µm to 80 µm.

In an exemplary embodiment, the thickness of the cast polypropylene (CPP) layer of the sealant layer may be, for example, 20 µm to 80 µm.

In an exemplary embodiment, the thickness of the extrusion polypropylene (PP) layer, which is the extrusion (EC) layer of the sealant layer, may be, for example, 0 to 60 µm.

According to exemplary embodiments, a method for preparing a secondary battery pouch film including at least an outer layer, a barrier layer, and a sealant layer which are laminated in that order, wherein the sealant layer includes an extrusion (EC) layer and a polypropylene (PP) layer, the method including preparing the polypropylene (PP) layer having a thickness ratio which is more than 0.5 when forming the extrusion (EC) layer on the polypropylene (PP) layer of the sealant layer, wherein an upper yield strength (N/mm²) in an MD direction of the sealant layer including the extrusion (EC) layer and the polypropylene (PP) layer is 17.50 to 19.99, preferably 17.50 to 19.80, and an upper yield strength (N/mm²) in a TD direction thereof is 17.00 to 19.99, preferably 17.00 to 19.50, wherein a glass transition temperature (Tg) of the sealant layer is -20°C to -10°C.

The thickness ratio of the polypropylene (PP) layer to the sealant layer may be obtained by selecting the thickness of the polypropylene (PP) layer itself and controlling the thickness of the extrusion (EC) layer when extruding the extrusion resin.

The upper yield strength and the glass transition temperature may also be easily adjusted by a person skilled in the art. As is known, the upper yield strength and the glass transition temperature may be determined by types of polypropylene (PP) resin in the sealant layer, properties such as softness, and the content of elastomer-based additives used in the sealant layer. Therefore, the upper yield strength and the glass transition temperature may be adjusted by selecting polypropylene and elastomer additives of known appropriate types and characteristics to have the desired upper yield strength and glass transition temperature.

Exemplary embodiments of the present invention provide a secondary battery encased with the aforementioned secondary battery pouch film. These secondary batteries may typically be lithium secondary batteries, and in particular, may be medium-sized to large-sized secondary batteries for such as electric vehicles (EV) or energy storage systems (ESS).

In addition, in an exemplary embodiment of the present invention, provided is a manufacturing method of a secondary battery, including encasing the secondary battery with the aforementioned secondary battery pouch film.

Exemplary embodiments of the present invention are explained in more detail through the following examples. The embodiments disclosed herein are illustrated for illustrative purposes only, and the embodiments of the present invention may be implemented in various forms and should not be construed as limited to the embodiments described herein.

### [Experiment]

In examples and comparative examples, the outer layer is composed of a composite layer of nylon (25*µ*m) and PET (12*µ*m), and the metal layer is made of aluminum foil (60*µ*m), and as shown in Table 1 below, the thicknesses of the extrusion layer and the polypropylene (cast polypropylene (CPP)) layer of the sealant layer are adjusted to have the yield strength and Tg values shown in the table below. In addition, each yield strength, Tg, and sealing strength are evaluated by the method described below. The total thickness including the adhesive layer is 183 *µ*m.

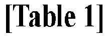

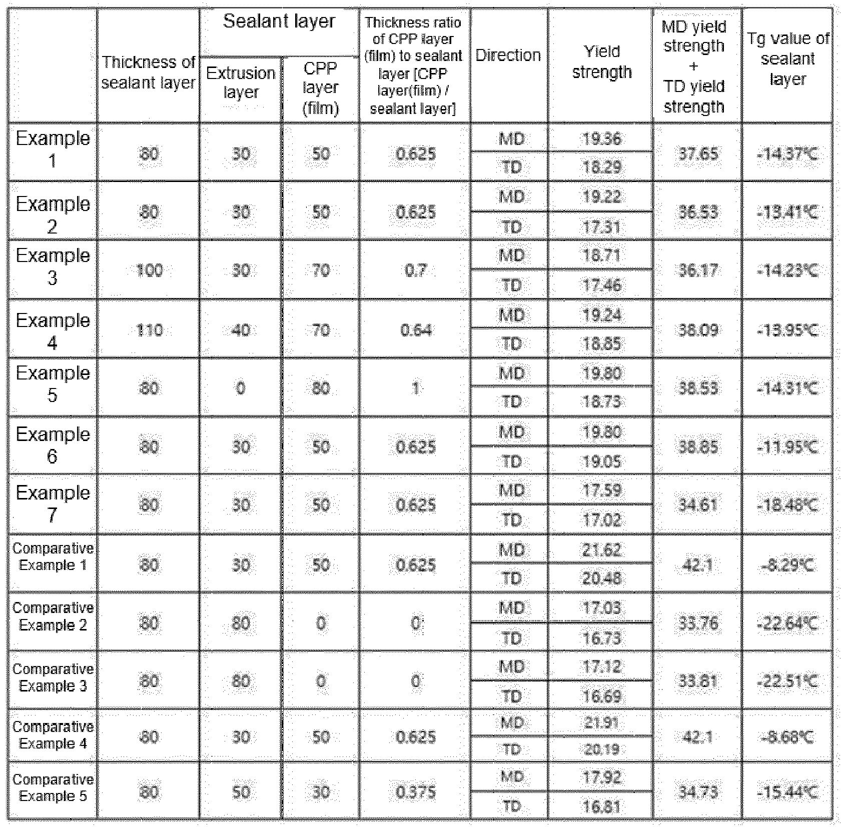

### <Yield strength>

The specimen is prepared by peeling off the sealant layer of the pouch film and making it 15mm wide x 100mm long.

The yield strength is measured using SHIMADZU's AGS-X model UTM equipment, and the measurement condition is a test speed of 50 mpm and a grip gap of 30 mm.

The specimen stretches in proportion to the increase in load, but when exceeding its elastic limit, it begins to stretch out of proportion to the load, which is called the yield point. In the case of CPP, there is no lower yield point, so its yield point is the upper yield point.

### <Tg measurement method>

TA's DSC250 equipment is used. The measurement is carried up to a temperature of -50°C, with a temperature elevation rate of 10°C and a cooling rate of -20°C. The Tg value is calculated using an analysis program (TRIOS) at -50°C, which is the approximate Tg value of PP.

### <Maximum sealing strength when sealed under condition of sealing at 220°C>

The specimen is prepared by making a pouch film in the size of 100mm x 200 mm, folding in half and sealing the pouch film, and cutting it into pieces with a width of 15mm in a direction perpendicular to the sealing direction.

The sealing is carried under the condition of a seal bar width of 200 mm x seal thickness of 10 mm, 2.0 seconds, 0.2 MPa, and a temperature of 220°C.

The sealing strength is measured by measuring the sealing strength (load) of the specimen while pulling the specimen in the MD and TD direction with a sealing strength meter (e.g., SHIMADZU's AGS-X model UTM equipment), and the measurement condition is a test speed of 10 mpm, and a grip gap of 30 mm.

In the case of ambient temperature measurement, the measurement is performed at ambient temperature, and in the case of high temperature measurement, the measurement is performed after being left for 3 minutes at 60°C, and the results are shown in Table 2 below.

A maximum value of the sealing strength measurement values is a maximum sealing strength. That is, when measuring the sealing strength while pulling the sealing part, the maximum strength is shown as the maximum sealing strength.

### <Measurement of ambient temperature energy, high temperature energy, and respective maximum stroke at ambient temperature and high temperature in the TD direction when sealed under condition of sealing at 220°C>

The ambient temperature energy and high temperature energy are evaluated to evaluate the sealing strength maintenance in the TD direction. For the evaluation, the ambient temperature energy (energy measured at ambient temperature) or the high temperature energy (energy measured after being left for 3 minutes at 60°C) is measured in the same manner as the sealing strength measurement method described above, and when the X-axis is a stroke (distance) of pulling a sealing part in the TD direction and the Y-axis is a sealing strength, the ambient temperature energy or the high temperature energy at the ambient or high temperature (measured after being left for 3 minutes at 60°C) is defined as an area between the graph for sealing strength change according to the stroke and the X-axis representing the stroke (i.e., an integral value of the graph for sealing strength change according to the stroke), where the stroke range for an integration is from 0 mm to 20 mm.

Meanwhile, the maximum stroke is measured at ambient temperature and high temperature to evaluate the sealing strength maintenance in the TD direction.

That is, the maximum stroke at the ambient or high temperature (measured after being left for 3 minutes at 60°C) is measured in the same manner as the sealing strength measurement method described above, and when the X-axis is a stroke (distance) of pulling a sealing part in the TD direction and the Y-axis is a sealing strength, a sealing strength curve increases as the stroke increases, and the stroke (distance) at which the sealing strength value is maximum is evaluated as a maximum stroke. If evaluated at ambient temperature, the maximum stroke is an ambient temperature maximum stroke, and if evaluated at high temperature, the maximum stroke is a high temperature maximum stroke.

As mentioned above, the above maximum stroke and energy (integral value between the stroke axis and the sealing strength graph) can be important factors for evaluating the maintenance characteristics of the sealing strength (reliability). That is, although the maximum sealing strength, which is a peak value, is high, the sealing strength maintenance may not be determined based on the maximum sealing strength alone. However, depending on the maximum stroke, it is possible to know how quickly the maximum sealing strength reaches the maximum value and then falls. In addition, through an area (integral value) formed by the stroke and the sealing strength curve, it is possible to evaluate whether the sealing strength is well maintained, that is, whether it is reliable.

In the case of medium-sized to large-sized batteries for electric vehicles, there are many models formed in the MD direction. Since the MD direction sealing is generally better than that the TD direction sealing, it is an important measurement concern whether sealing strength is maintained in the TD direction sealing (pouch to pouch sealing) having relatively weaker sealing properties than the MD direction sealing (tap to pouch sealing). Accordingly, the change in sealing strength according to the change in stroke in the TD direction is measured and shown in Table 3 below.

### <Leakage test>

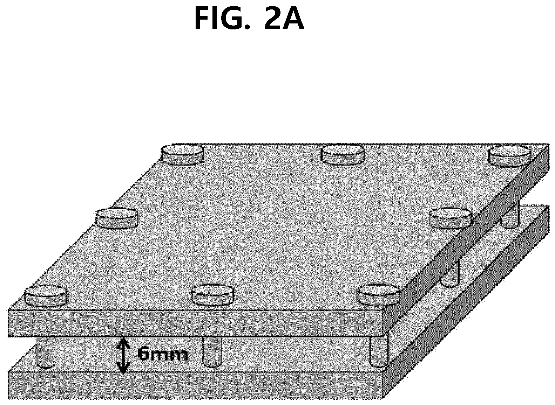

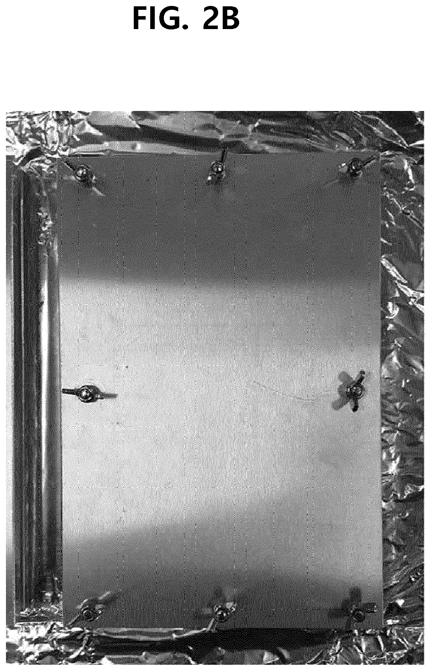

The secondary battery pouch films of examples and comparative examples are molded (6 mm molded) using a molding machine, and then a total of 20 simple battery pack specimens are produced (200 mm x 110 mm). Atab (manufactured by Sumitomo) is inserted into the battery pack specimen. After inserting the simple battery pack specimen into a jig, the upper and lower spacings (6 mm) of the zig are fixed and combined. FIG. 2A is a schematic diagram of a jig used in this experiment, and FIG. 2B is a photograph of a battery pack sample coupled to the jig in this experiment.

After 90 days at 80°C, leakage is evaluated (long-term reliability evaluation), and the number of leaks (failures) out of a total of 20 is measured and shown in Table 4 below.

### <Evaluation result>

Table 2 below shows the maximum sealing strength test results of the examples and comparative examples when sealed under the condition of sealing at 220°C.

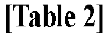

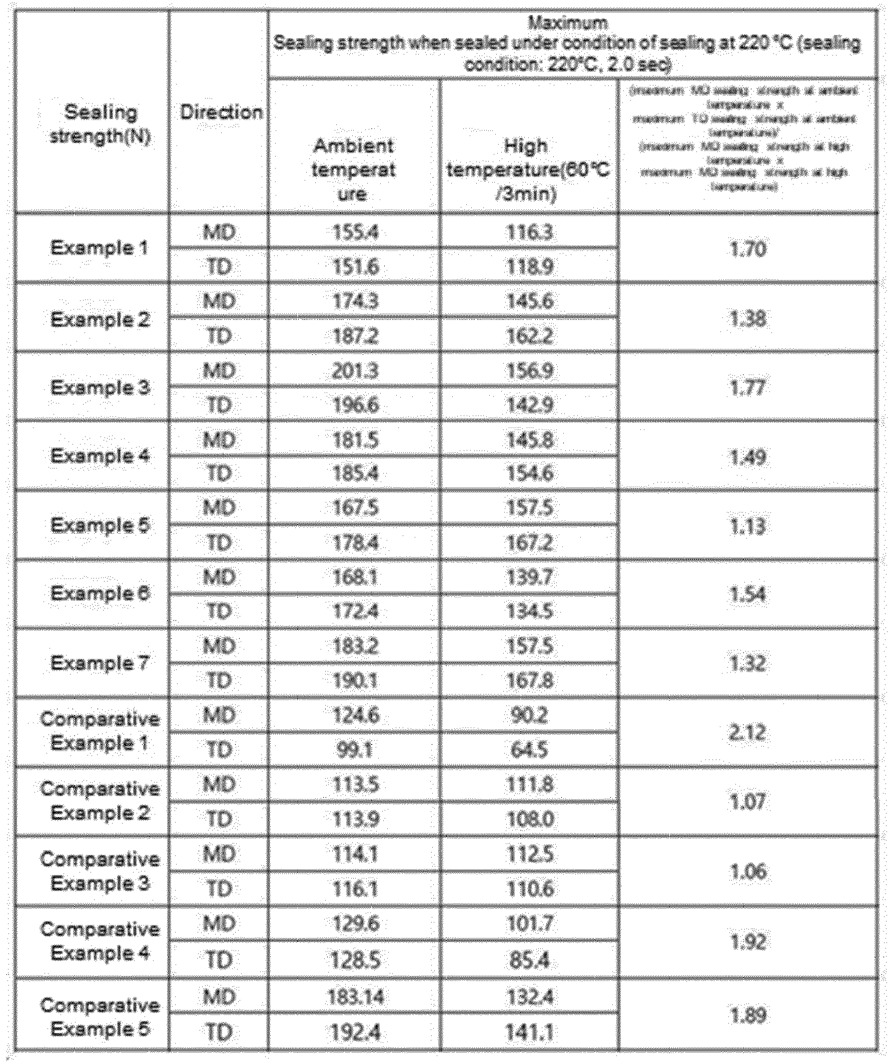

In addition, the energy values and maximum strokes of the sealed pouch at ambient temperature and high temperature are listed in Table 3 below.

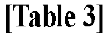

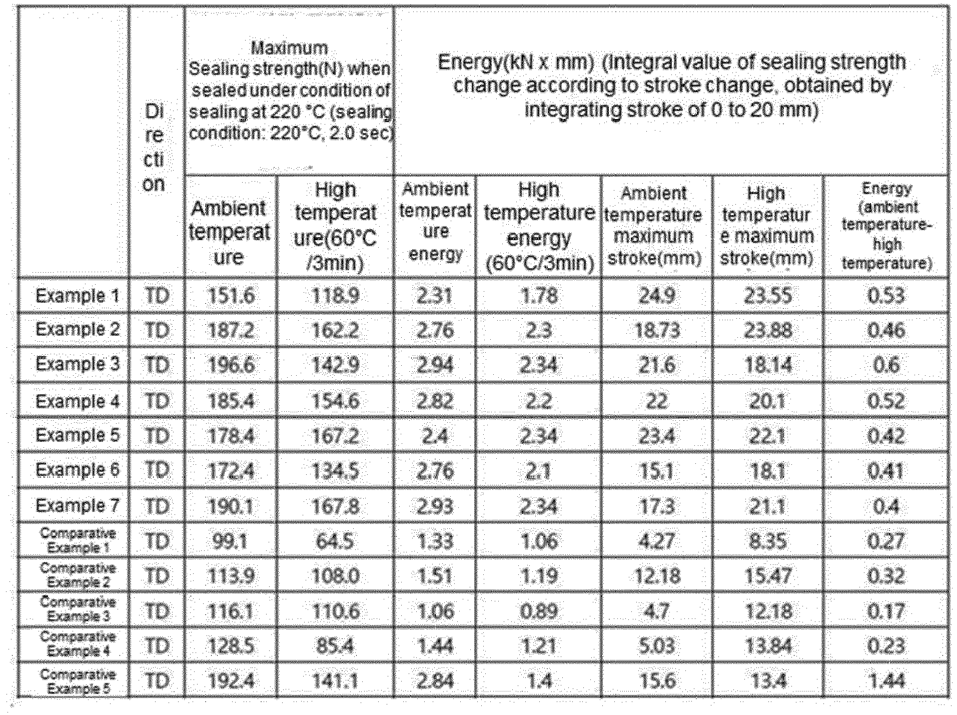

As shown in Table 3, as the ambient temperature energy, high temperature energy, ambient temperature maximum stroke, and high temperature maximum stroke of the examples are all significantly superior to the comparative examples, it can be seen that the sealing strength maintenance at ambient temperature as well as the sealing strength maintenance at high temperature are excellent.

Table 4 shows the leakage test measurement results of examples and comparative examples.

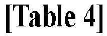

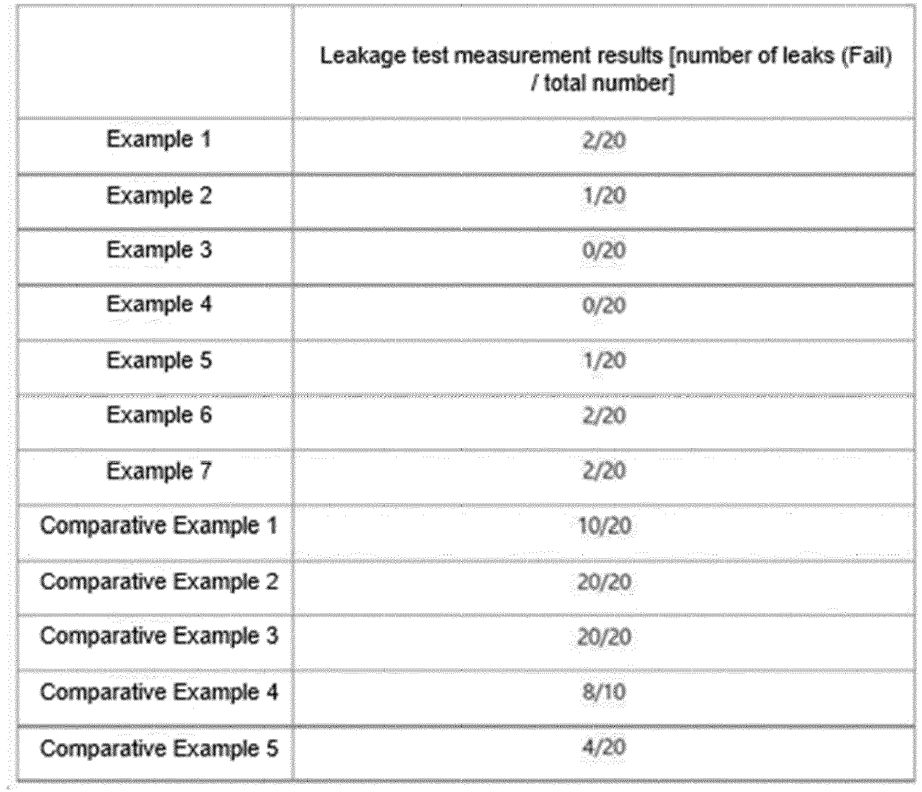

As shown in Table 4, the number of liquid leaks in the examples as a result of the liquid leakage test is significantly less than that of the comparative examples, indicating that the long-term reliability of the battery pack at high temperature is excellent, which means excellent battery safety.

Although non-limiting and exemplary embodiments of the present invention have been described above, the technical idea of the present invention is not limited to the accompanying drawings or the above description. It is obvious to those skilled in the art that various forms of modification are possible without departing from the technical spirit of the present invention, and such types of modifications will fall within the scope of the claims of the present invention.

## Claims

1. A secondary battery pouch film, comprising
a layered structure wherein at least an outer layer, a barrier layer, and a sealant layer are structured in that order, wherein the sealant layer comprises an extrusion (EC) layer and a polypropylene (PP) layer, and the extrusion (EC) layer is located on the barrier layer side relative to the polypropylene (PP) layer,
wherein a thickness ratio of the polypropylene (PP) layer to the sealant layer comprising the extrusion (EC) layer and the polypropylene (PP) layer is more than 0.5,
wherein an upper yield strength (N/mm²) in an MD direction of the sealant layer comprising the extrusion (EC) layer and the polypropylene (PP) layer is 17.50 to 19.99, and an upper yield strength (N/mm²) in a TD direction thereof is 17.00 to 19.99,
wherein a glass transition temperature (Tg) of the sealant layer comprising the extrusion (EC) layer and the polypropylene (PP) layer is -20°C to -10°C.

2. The secondary battery pouch film of claim 1,
wherein the sum of the upper yield strength (N/mm²) in the MD direction and the upper yield strength (N/mm2) in the TD direction of the sealant layer comprising the extrusion (EC) layer and the polypropylene (PP) layer is 34.5 or more and 39.9 or less.

3. The secondary battery pouch film of claim 2,
wherein the upper yield strength (N/mm²) in the MD direction of the sealant layer comprising the extrusion (EC) layer and the polypropylene (PP) layer is more than the upper yield strength (N/mm²) in the TD direction thereof.

4. The secondary battery pouch film of any one of claims 1-3,
wherein, when the secondary battery pouch film is sealed under the condition of sealing at 220°C, a measurement value of the maximum sealing strength of the secondary battery pouch film at ambient temperature in both MD and TD directions, is 150 N or more and 205 N or less, measured by a method of measuring maximum sealing strength at ambient temperature when film is sealed under the condition of sealing at 220°C,
wherein in said method of measuring maximum sealing strength at ambient temperature when film is sealed under the condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the sealing strength of a specimen in each of the MD and TD directions is measured at ambient temperature by a sealing strength meter, and the measurement is carried under a condition of a test speed of 10 mpm and a grip gap of 30 mm,
a maximum value of the sealing strength measurement values is a maximum sealing strength.

5. The secondary battery pouch film of any one of claims claim 1-4,
wherein, when the secondary battery pouch film is sealed under the condition of sealing at 220°C, a measurement value of the maximum sealing strength of the secondary battery pouch film at high temperature (sealing strength value measured after being left at 60°C for 3 minutes) in at least one of the MD and TD directions, is 115 N or more and 170 N or less, measured by a method of measuring maximum sealing strength at high temperature when film is sealed under the condition of sealing at 220°C,
wherein in said method of measuring maximum sealing strength at high temperature when film is sealed under the condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the sealing strength of a specimen in at least one of the MD and TD directions is measured after being left at 60°C for 3 minutes by a sealing strength meter, and the measurement is carried under a condition of a test speed of 10 mpm and a grip gap of 30 mm,
a maximum value of the sealing strength measurement values is a maximum sealing strength.

6. The secondary battery pouch film of any one of claims 1-5,
wherein the secondary battery pouch film has a maximum sealing strength parameter of 1.1 or more and 1.8 or less with respect to the maximum sealing strength when sealed under the condition of sealing at 220°C,
wherein said maximum sealing strength parameter is determined by (the maximum sealing strength in the MD direction at ambient temperature x the maximum sealing strength in the TD direction at ambient temperature) / (the maximum sealing strength in the MD direction at high temperature x the maximum sealing strength in the TD direction at high temperature).

7. The secondary battery pouch film of any one of claims 1-6,
wherein the secondary battery pouch film has an ambient temperature energy of 2.0 to 3.0 KN x mm in the TD direction, when sealed under the condition of sealing at 220°C, measured by a method of measurement of ambient temperature energy in TD direction when sealed under condition of sealing at 220°C,
wherein in said method of measurement of ambient temperature energy in TD direction when sealed under condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the change in the sealing strength is measured by pulling the specimen in the TD direction with the sealing strength meter at ambient temperature, and the measurement is carried under a condition of a test speed of 10 mpm and a grip gap of 30 mm,
when the X-axis is a stroke (distance) of pulling a sealing part in the TD direction and the Y-axis is a sealing strength, an area between the graph for sealing strength change according to the stroke and the X-axis representing the stroke - an integral value of the graph for sealing strength change according to the stroke - is defined as an ambient temperature energy, where the stroke range for an integration is from 0 mm to 20 mm.

8. The secondary battery pouch film of any one of claims 1-7,
wherein the secondary battery pouch film has a high temperature energy of 1.5 to 2.5 KN x mm in the TD direction, when sealed under the condition of sealing at 220°C, measured by a method of measurement of high temperature energy in TD direction when sealed under condition of sealing at 220°C,
wherein in said method of measurement of high temperature energy in TD direction when sealed under condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the change in the sealing strength is measured by pulling the specimen in the TD direction with the sealing strength meter at high temperature after being left for 3 minutes at 60°C, and the measurement condition includes a test speed of 10 mpm and a grip gap of 30 mm,
when the X-axis is a stroke (distance) of pulling the sealing part in the TD direction and the Y-axis is the sealing strength, an area between the graph for sealing strength change according to the stroke and the X-axis representing the stroke - an integral value of the graph for sealing strength change according to the stroke - is defined as a high temperature energy, where the stroke range for an integration is from 0 mm to 20 mm.

9. The secondary battery pouch film of any one of claims 1-8,
wherein the difference between the ambient temperature energy and the high temperature energy of the secondary battery pouch film in the TD direction, when sealed under the condition of sealing at 220°C is 0.4 to 0.6 KN x mm, as measured by a method of measurement of ambient temperature energy and high temperature energy in the TD direction when sealed under condition of sealing at 220°C,
wherein in said method of measurement of ambient temperature energy and high temperature energy in the TD direction when sealed under condition of sealing at 220°C
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the change in the sealing strength is measured by pulling the specimen in the TD direction with the sealing strength meter at ambient temperature or at high temperature after being left for 3 minutes at 60°C, and the measurement is carried under a condition of a test speed of 10 mpm and a grip gap of 30 mm,
when the X-axis is a stroke (distance) of pulling a sealing part in the TD direction and the Y-axis is the sealing strength, an area between the graph for sealing strength change according to the stroke and the X-axis representing the stroke - an integral value of the graph for sealing strength change according to the stroke - is defined as an ambient temperature energy or a high temperature energy, where the stroke range for an integration is from 0 mm to 20 mm,
the energy measured at ambient temperature is an ambient temperature energy, and the energy measured at high temperature is a high temperature energy.

10. The secondary battery pouch film of any one of claims 1-9,
wherein the secondary battery pouch film has a maximum stroke of 15 mm to 25 mm in the TD direction at ambient temperature, when sealed under the condition of sealing at 220°C, measured by a method of measurement of ambient temperature maximum stroke in TD direction when sealed under condition of sealing at 220°C, wherein in said method of measurement of ambient temperature maximum stroke in TD direction when sealed under condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the change in the sealing strength is measured by pulling the specimen in the TD direction with the sealing strength meter at ambient temperature, and the measurement is carried under a condition of a test speed of 10 mpm and a grip gap of 30 mm,
when the X-axis is a stroke (distance) of pulling a sealing part in the TD direction and the Y-axis is the sealing strength, a sealing strength curve increases as the stroke increases, the stroke (distance) at which the sealing strength value is maximum is evaluated as a maximum stroke.

11. The secondary battery pouch film of any one of claims 1-10,
wherein the secondary battery pouch film has a maximum stroke of 18 mm to 24 mm at high temperature in the TD direction, when sealed under the condition of sealing at 220°C, measured by a method of measurement of high temperature maximum stroke in TD direction when sealed under condition of sealing at 220°C,
wherein in said method of measurement of high temperature maximum stroke in TD direction when sealed under condition of sealing at 220°C,
after producing a secondary battery pouch film in the size of 100 mm x 200 mm, the secondary battery pouch film is folded in half and sealed, and then cut to a size of 15 mm in width in a direction perpendicular to the sealing direction,
the sealing is carried under a sealing condition of a seal bar width of 200 mm x a seal thickness of 10 mm, 2.0 seconds, 0.2 MPa, and a temperature of 220°C,
the change in the sealing strength is measured by pulling the specimen in the TD direction with the sealing strength meter at high temperature after being left for 3 minutes at 60°C, and the measurement is carried under a condition of a test speed of 10 mpm and a grip gap of 30 mm,
when the X-axis is a stroke (distance) of pulling a sealing part in the TD direction and the Y-axis is the sealing strength, the sealing strength curve increases as the stroke increases, and the stroke (distance) at which the sealing strength value is maximum is evaluated as the maximum stroke.

12. A method for preparing a secondary battery pouch film, wherein the secondary battery pouch film comprises a layered structure wherein at least an outer layer, a barrier layer, and a sealant layer are structured in that order, wherein the sealant layer comprises an extrusion (EC) layer and a polypropylene (PP) layer, and the extrusion (EC) layer is located on the barrier layer side relative to the polypropylene (PP) layer,
the method comprising preparing the sealant layer having a thickness ratio which is more than 0.5 when forming the extrusion (EC) layer on the polypropylene (PP) layer of the sealant layer,
wherein an upper yield strength (N/mm²) in the MD direction of the sealant layer comprising the extrusion (EC) layer and the polypropylene (PP) layer is 17.50 to 19.99, and an upper yield strength (N/mm²) in a TD direction is 17.00 to 19.99,
wherein a glass transition temperature (Tg) of the sealant layer comprising the extrusion (EC) layer and the polypropylene (PP) layer is -20°C to -10°C.

13. A secondary battery encased with the secondary battery pouch film of any of claims 1 to 11.

14. The secondary battery of claim 13,
wherein the secondary battery is for electric vehicles or energy storage devices.

15. A manufacturing method of a secondary battery, comprising
encasing the secondary battery with the secondary battery pouch film of any of claims 1 to 11.
